# EUROPÄISCHE PATENTSCHRIFT

(11) **EP 1 916 370 B1**
(45) Veröffentlichungstag und Bekanntmachung des Hinweises auf die Patenterteilung: **23.12.2015**
(21) Anmeldenummer: 06122616.3
(22) Anmeldetag: 19.10.2006
(51) Int. Cl.: E05F 5/00, E05D 15/06

(54) **Vorrichtung mit einem Laufwerk zum Halten von verschiebbaren Platten und Trennelement**
Suspension system with a running gear for sliding panels
Système de suspension avec un chariot pour panneaux coulissants

(43) Veröffentlichungstag der Anmeldung: 30.04.2008
(73) Patentinhaber: HAWA AG, 8932 Mettmenstetten (CH)
(72) Erfinder: Haab, Gregor, 6340 Baar (CH); Füglistaller, Cornel, 8916 Jonen (CH); Beck, Reto, 6020 Emmenbrücke (CH); Haab, Karl, 6353 Weggis (CH)
(74) Vertreter: Rutz & Partner

(56) Entgegenhaltungen:
- EP-A- 1 705 326
- EP-A1- 0 818 598
- EP-A2- 0 940 542
- WO-A-2006/032157
- US-A- 4 031 664
- US-A- 4 227 355

## Beschreibung

Die Erfindung betrifft eine Vorrichtung mit einem Laufwerk zum Halten von Platten, insbesondere Glasplatten, sowie ein mit dieser Vorrichtung und einer Platte versehenes Trennelement nach dem Oberbegriff des Patentanspruchs 1, 6 bzw. 16.

Zum Trennen oder Gestalten von Räumen oder zum Abschliessen von Raum- oder Fensteröffnungen werden oft Glas- oder Holzwände, Kulissen, Türen oder Läden verwendet, nachstehend als Trennelemente bezeichnet, die fest montiert oder an entlang einer Schiene verschiebbaren Laufwerken befestigt und gegebenenfalls drehbar gelagert sind.

Eine Vorrichtung zum Halten von Glasplatten ist beispielsweise aus [1], WO 98/59140 A1 bekannt, bei der zwei in eine Ausnehmung in einer Glasplatte einzufügende Befestigungsteile mittels eines Verbindungsteils miteinander verbindbar sind, das durch eine in der Glasplatte vorgesehene Bohrung durchführbar ist und diese daher formschlüssig hält. Die Glasplatte ist dabei mittels eines exzentrischen Justierelements, das in die Bohrung eingeführt wird, justierbar. Dadurch lassen sich Ungenauigkeiten ausgleichen, die bei der Bearbeitung der Glasplatte entstanden sind. Zwischen den beiden Teilen der Vorrichtung, innerhalb der genannten Ausnehmung der Glasplatte, ist eine justierbare Verbindungsschraube gehalten, die mit einem in einer Laufschiene geführten Laufwerk verbunden ist.

Mittels der in [1] offenbarten Vorrichtung kann die Glasplatte ohne Rahmenleiste montiert werden, wie dies beispielsweise in [2], EP 0 586 840 A1 vorgesehen ist. Durch die Vermeidung einer Rahmenleiste bei der in [1] beschriebenen Vorrichtung können Trennelemente geschaffen werden, deren Platten weitgehend frei liegen. Lediglich im Bereich der Beschläge sind die Trennelemente durch Beschlagselemente abgedeckt. Für verschiedene Anwendungen wäre es jedoch trotzdem wünschenswert, wenn diese verbleibende Abdeckung der Trennelemente bzw. Glasplatten weiter reduziert oder sogar vollständig beseitigt werden könnte.

Ferner ist bei der in [1] offenbarten Vorrichtung für jeden Beschlag nebst einer Bohrung auch eine Ausnehmung in die Glasplatte einzuarbeiten, was mit erheblichem Aufwand verbunden ist. Es wäre daher auch wünschenswert, wenn dieser Aufwand zur Bearbeitung der Glasplatten reduziert werden könnte.

Bei der Montage der in [1] und [2] offenbarten Vorrichtungen sind ferner Justierungen vorzunehmen, die einen entsprechend hohen Montageaufwand verursachen. Es wäre daher zudem wünschenswert, wenn dieser Aufwand reduziert werden könnte.

Das in [1] beschriebene Laufwerk, das in einer U-Profil-förmigen Schiene geführt ist, weist einen Laufwerkskörper auf, der mit vier Laufrädern versehen ist und in den die oben genannte Verbindungsschraube eingreift. Auch zur Fertigung eines solchen Laufwerks ist normalerweise ein relativ hoher Arbeits- und Materialaufwand erforderlich. Ferner nimmt ein solches, eher schweres Laufwerk relativ viel Raum in Anspruch, so dass entsprechend hohe Lager- und Transportkosten resultieren. Es wäre daher weiter wünschenswert, ein Laufwerk zu schaffen, das einfacher und kostengünstiger herstellbar ist, ein geringeres Gewicht aufweist und vorteilhafter gelagert und transportiert werden könnte.

Die EP0940542A2 offenbart eine Vorrichtung zum Montieren einer Glasschiebetür mit Aufhängeköpfen, die je am oberen Rand der Glastür befestigbar und durch eine Schraube mit einem in der Laufschiene geführten Laufwerk verbindbar sind.

Die EP0818598A1 offenbart ein Beschlagsystem mit einer mit einem Schiebeelement verbindbaren Halteschiene, die zur Aufnahme einer arretierbaren Halterung vorgesehenen ist, welche über eine Schraube mit einem in einer Führungsschiene geführten Laufwerk verbindbar ist.

Die EP1705326A2 offenbart eine Vorrichtung zum Montieren einer Schiebetür, die mittels Magneten gehalten wird.

Die US4031664A und die US4227355A betreffen zur Montage eines Panels vorgesehene Haltevorrichtungen, die je am oberen Rand des Panels befestigbar und durch eine Flanschplatte mit einem in einer Laufschiene geführten Laufwerk verbindbar sind.

Der vorliegenden Erfindung liegt daher die Aufgabe zugrunde, eine dem Halten von Platten, insbesondere Glasplatten, dienende Vorrichtung mit einem Laufwerk sowie ein mit einer solchen Vorrichtung versehenes Trennelement zu schaffen, welche wünschgemäss weitergebildet und nicht mit den aus dem Stand der Technik beschriebenen Mängeln behaftet sind.

Insbesondere sind ein Laufwerk und eine Vorrichtung zu schaffen, welche es erlauben, eine Platte, insbesondere eine Glasplatte, verschiebbar zu halten, ohne dass mit der Platte verschiebbare Vorrichtungsteile in den Bereich unterhalb des Laufwerks hinein ragen. Insbesondere sollen mit der Platte verbundene Beschlagselemente, aber auch das mit Laufrädern oder Gleitflächen versehene Laufwerk möglichst wenig in den Bereich unterhalb der Laufflächen der Schiene hinein ragen.

Diese Aufgabe wird mit einer Vorrichtung und einem Trennelement gelöst, welche die in Anspruch 1 bzw. 16 angegebenen Merkmale aufweisen. Vorteilhafte Ausgestaltungen der Erfindung sind in weiteren Ansprüchen angegeben.

Das Laufwerk, das dem Halten einer Platte, insbesondere einer Glasplatte, dient, weist wenigstens ein Laufelement, wie ein Magnet, ein Laufrad und/oder ein Gleitelement, auf, das von wenigstens einem korrespondierenden magnetischen Element gehalten bzw. auf einer Lauffläche einer zumindest annähernd U- oder L-Profil-förmigen Schiene abgestützt wird, welche ein Mittelteil und ein oder zwei Seitenteile gegebenenfalls mit einem Fusselement aufweist, an dessen Oberseite die Lauffläche vorgesehen ist.

Erfindungsgemäss weist das Laufwerk zwei miteinander verbundene oder vorzugsweise voneinander getrennte Laufwerksteile auf, die mittels Befestigungsmitteln an oder in der Platte befestigbar sind, indem die beiden Laufwerksteile auf den einander gegenüber liegenden Seiten der Platte je mittels den Befestigungsmitteln verankerbar sind bzw. indem das eine Laufwerksteil in eine an der Oberseite der Platte zwischen den Plattenseiten eingelassene Nut einführbar und dort mittels der Befestigungsmittel verankerbar ist. Die Vorrichtung umfasst das erfindungsgemässe Laufwerk sowie eine einerseits mit dem Laufwerk und andererseits mit der Glasplatte verbindbare Befestigungsvorrichtung mit zwei Montageteilen, die je auf einer Seite an der Oberseite der Platte oder innerhalb einer Nut der Platte eingearbeitet, angeformt oder montiert sind. Vorzugsweise sind wenigstens zwei Laufelemente vorgesehen, die an einem einstückigen Laufwerkskörper eines Laufwerks, an einem der beiden Laufwerksteile eines Laufwerks oder in vorzugsweise gleicher Anzahl an den beiden Laufwerksteilen des Laufwerks angeordnet sind. Das ein- oder zweiteilige Laufwerk kann jedoch auch mit nur einem Laufelement versehen sein, das in einer Lauf- oder Führungsschiene geführt ist.

Die Vorrichtung umfasst das erfindungsgemässe Laufwerk sowie zusätzliche Befestigungsmittel.

Die Befestigungsmittel umfassen die am Laufwerk vorgesehenen Ankerelemente und eine Befestigungsvorrichtung, die für jedes der Ankerelemente ein innerhalb der Nut an dessen Seiten oder an den Seiten der Platte anzuordnendes Montageteil enthält,
a) die an der gegebenenfalls verjüngten Oberseite der Platte, gegebenenfalls innerhalb der Nut einstückig angeformt oder eingearbeitet sind; oder
b) die einstückig oder mehrstückig ausgebildet und mittels Montagemitteln, wie Schrauben, an der gegebenenfalls verjüngten Oberseite der Platte, gegebenenfalls innerhalb der Nut, montiert sind; oder
c) die einstückig oder mehrstückig ausgebildet und mittels eines Bolzens miteinander verbunden sind, der durch eine durchgehende Ausnehmung in der Platte hindurchgeführt ist.

Die erfindungsgemässe Vorrichtung und das Laufwerk erlauben daher, die gehaltene Platte verschiebbar zu halten, ohne dass mit der Platte verschiebbare Vorrichtungsteile störend in den Bereich unterhalb des Laufwerks hinein ragen. Indem das Laufwerk innerhalb der Nut an der Oberseite der Platte verankert wird, kann dieses von störenden Elementen gänzlich freigehalten werden.

Die Verbindung der Laufwerksteile bzw. deren Laufwerksteilkörper an der Oberseite der Platte, gegebenenfalls innerhalb der Nut, kann auf verschiedene Arten erfolgen. Beispielsweise können die Laufwerksteilkörper mittels eines Bolzens miteinander verbunden werden, der durch eine Öffnung in der Platte hindurch geführt wird. Besonders vorteilhaft sind jedoch Ausgestaltungen mit einer an oder in der Nut der Platte montierten Befestigungsvorrichtung, die es erlaubt, das Laufwerk bzw. einen Laufwerksteilkörper darin einzuhängen oder darin zu verschieben.

Vorzugsweise sind die beiden an der Aussenseite der Platte zu montierenden Laufwerksteilkörper plattenförmig ausgestaltet und an deren Unterseite mit einem gegen die Platte gerichteten, leistenförmigen Ankerelement versehen.

Sofern das Laufwerk mit nur einem Laufwerksteil in die Nut innerhalb der Platte eingeführt wird, so ist dieses vorzugsweise mit zwei voneinander abgewandten Ankerelementen versehen, die gegen die Seitenwände der Nut gerichtet sind.

Jedes der Ankerelemente umfasst eine parallel zur Platte verlaufende Aufnahmenut, welche in einfacher Weise mit einem gegebenenfalls abgestuften bzw. mit einer Schulter versehenen Flanschelement der Befestigungsvorrichtung gekoppelt werden kann.

Die Befestigungsvorrichtung umfasst vorzugsweise zwei Montageteile, die je auf einer Seite an der Oberseite der Platte oder der innerhalb der Nut eingearbeitet, angeformt oder montiert und gegebenenfalls mittels eines Bolzens miteinander verbunden sind.

Die Montageteile sind beispielsweise I- oder L-Profil-förmige Platten, die symmetrisch zu einer Ebene ausgebildet sind. Die Verwendung von zwei voneinander getrennten Montageteilen erlaubt die Montage der Befestigungsvorrichtung an Platten mit unterschiedlichen Dicken bzw. Durchmessern. Sofern ein einheitlicher Durchmesser der Platte vorgesehen ist, werden die beiden Montageteile mittels eines zusätzlichen Mittelstücks vorzugsweise zu einem U-Profil verbunden, das einfach auf die Platte aufgesetzt und montiert werden kann.

Das erfindungsgemässe Laufwerk besteht vorzugsweise aus zwei Laufwerksteilen, die vollständig voneinander getrennt gefertigt werden können.

Die beiden Laufwerksteile bilden in einer vorzugsweisen Ausgestaltung daher erst nach der Befestigung an der Platte ein Laufwerk. Die Platte, beispielsweise die Glasplatte, und/oder die daran vorgesehene Befestigungsvorrichtung bilden in dieser Ausgestaltung somit einen Teil der Laufwerksstruktur, der die beiden Laufwerksteile miteinander verbindet. Die Befestigungsvorrichtung weist die zur Verbindung mit dem Laufwerk erforderlichen Montagemittel, wie Schultern, Flanschen oder Kanten, auf. Diese Montagemittel können vorteilhaft auch in der Oberseite bzw. dem oberen Endstück der Platte vorgesehen, beispielsweise eingearbeitet werden.

Diese zweiteilige Ausgestaltung des Laufwerks weist zahlreiche weitere Vorteile auf. Die Laufwerksteile, die je einen Laufwerksteilkörper aufweisen, der mit einem oder mehreren Laufelementen versehen ist, können mit geringem Aufwand hergestellt werden. Beispielsweise können die Laufwerksteilkörper extrudiert oder aus einer Metallplatte gefertigt werden, die gegebenenfalls mit einfachen Massnahmen bearbeitet, gegebenenfalls gebogen wird. Die erforderlichen Öffnungen zur Aufnahme von Wellen und Schrauben können mit minimalem Aufwand in die Laufwerksteilkörper eingearbeitet werden. Vorzugsweise sind die beiden Laufwerksteile und/oder die Laufwerksteilkörper symmetrisch zu einer Ebene ausgebildet, die senkrecht zur Laufrichtung des steht. Zur Durchführung von konstruktiven Änderungen kann daher nur einer der Laufwerksteilkörper bearbeitet und anschliessend an der genannten Ebene gespiegelt werden. Als Laufelemente, kann das Laufwerk anstelle von Rädern und Rollen auch Gleitelemente und/oder Magnetlager aufweisen, die zu entsprechenden Elementen, wie Gleitelemente oder Magnetelementen korrespondieren. Laufwerke mit Gleitflächen können dabei mit minimalen Bauhöhen realisiert werden.

Die Laufwerksteilkörper nehmen wenig Raum in Anspruch und können beispielsweise aneinander liegend vorteilhaft gelagert und transportiert werden.

Die beiden Laufwerksteilkörper können jedoch auch bereits vor der Verbindung mit der Platte durch starre oder elastische Elemente fest oder lose miteinander verbunden werden. Die beiden Laufwerksteilkörper können besonders einfach montiert werden, wenn sie vor der Montage mittels eines vorzugsweise elastischen Kopplungselements miteinander verbunden werden. Das Kopplungselement kann anschliessend entfernt oder auch belassen werden. Das elastische Kopplungselement erlaubt insbesondere auch die gegenseitige Verschiebung und/oder Verdrehung der Laufwerksteilkörper, welche für eine gleichmässige Belastung aller Laufelemente gegebenenfalls erforderlich ist und sich dadurch automatisch einstellt. Alle Laufelemente, z.B. 4 oder 6 Laufräder, werden dadurch gleichmässig belastet. In einer weiteren vorzugsweisen Ausgestaltung ist das elastische Kopplungselement, beispielsweise in der Art eines Balges, faltbar oder zusammenklappbar. Zwei mittels eines faltbaren elastischen Kopplungselements miteinander verbundene Laufwerksteile können dadurch soweit gegeneinander gedrückt werden, dass sie mit den Laufelementen zwischen den Fusselementen der U-Profil-förmigen Schiene hindurch in diese eingeführt werden können, so dass sich die Laufelemente, beispielsweise die Laufrollen, nach der Entlastung des faltbaren elastischen Kopplungselements, über die Laufflächen der Schiene verschieben. Diese Ausgestaltung des Laufwerks bzw. des elastischen Kopplungselements ist besonders vorteilhaft, da sie die Montage oder auch die Demontage eines Laufwerks in bzw. aus einer bereits fest installierten Schiene erlaubt, deren seitliche Eintrittsöffnungen beispielsweise durch Mauerwerk verschlossen sind. Das Laufwerk kann daher mit einem Handgriff von unten in die montierte Schiene eingeführt und wieder entnommen werden, was insbesondere auch für spätere Wartungsarbeiten ausserordentlich vorteilhaft ist.

Zwischen den Montageteilen und der Platte wird vorzugsweise wenigstens ein elastisches Schutzelement vorgesehen, welches verhindert, dass die Montageteile direkt an der Platte anliegen und punktuell Druck auf diese ausüben.

Der der Verbindung der beiden an den Aussenseiten der Platte zu montierenden Laufwerksteile dienende Bolzen besteht vorzugsweise aus elastischem Material oder aus Metall das mit elastischem Material beschichtet ist. Zur Kompensation von Ungenauigkeiten bei der Bearbeitung der Glasplatte kann ein Exzenter auf den Bolzen aufgesetzt sein.

In einer vorzugsweisen Ausgestaltung wird der Bolzen vorzugsweise in der Mitte einer Ausnehmung in der Platte oder in der Mitte einer Ausnehmung in einem in die Platte eingesetzten Lagerelement gehalten, die sich parallel zur Schiene erstreckt und daher eine Verschiebung des Bolzens bzw. der Glasplatte relativ zum Bolzen in beide Richtungen erlaubt. Um dieser Relativbewegung entgegen zu wirken, sind in dieser Ausgestaltung der Erfindung beidseits des Bolzens elastische Dämpfungselemente vorgesehen, die verhindern, dass von der Platte einwirkende Kräfte ungedämpft auf die Befestigungsvorrichtung bzw. den gegebenenfalls an einem Anschlag anstehenden Schiebebeschlag oder einen den Anschlag bildenden Schienenpuffer einwirken. Die Kräfte werden daher unmittelbar dort aufgefangen, wo sie entstehen. Der Schiebebeschlag bzw. die weiteren Elemente der erfindungsgemässen Vorrichtung werden dadurch entlastet und können somit bei gleicher oder längerer zeitlicher Betriebsbelastung einfacher dimensioniert werden.

Die durchgehende Öffnung oder Ausnehmung in der Platte zur Durchführung des Bolzens wird vorzugsweise möglichst nahe der Oberseite bzw. Oberkante der Platte vorgesehen, wobei die erforderliche Festigkeit nicht unterschritten werden darf. Dabei kann die Öffnung näher zur Oberseite verschoben werden, wenn die Öffnung V-förmig gegen die Oberseite der Platte geöffnet wird. Im Vergleich zu den aus dem Stand der Technik bekannten Lösungen resultiert jedoch in jedem Fall, mit oder ohne V-förmige Öffnung, ein geringerer Aufwand zur Bearbeitung der Platte, da pro Beschlag nur eine Öffnung vorzusehen ist.

Die Höheneinstellung und Nivellierung der montierten Platte kann mittels der erfindungsgemässen Vorrichtung besonders einfach durchgeführt werden. Dazu sind die mit der Aufnahmenut versehenen Ankerelemente des Laufwerks schräg zur Oberseite der Platte und weitgehend parallel zu den ebenfalls schräg verlaufenden Unterseiten der Montageelemente ausgerichtet, die je ein in die Aufnahmenut einführbares Flanschelement und/oder eine Schulter aufweisen, die auf das Ankerelement abstützbar ist. Die Befestigungsvorrichtung und die Laufwerksteile können daher ineinander und zur Höheneinstellung anschliessend seitlich gegeneinander verschoben werden. Durch das Mass der gegenseitigen Verschiebung kann die Höhe der Oberkante der Platte wunschgemäss eingestellt werden. Damit das Montageteil relativ zum zugehörigen Laufwerksteilkörper verschoben werden kann, ohne diesen zu überlappen, ist die Länge der Oberseite des Laufwerksteils vorzugsweise etwa um den Faktor 1,2 - 1,4 grösser als die Länge der Oberseite des zugehörigen Montageteils zu wählen. Die Neigung der Ankerelemente ist vorzugsweise derart gewählt, dass zwischen den Eckwerten der maximal möglichen gegenseitigen Verschiebung eine Höhenänderung der mit der Platte verbundenen Befestigungsvorrichtung relativ zu dem in der Schiene geführten Laufwerk vorzugsweise im Bereich von wenigstens 0,5 cm bis maximal 1,5 cm möglich ist.

Da die Platte normalerweise mittels zwei Befestigungsvorrichtungen gehalten ist, kann diese durch individuelles Verschieben der Laufwerke in der Höhe eingestellt und nivelliert werden. Damit die Befestigungsvorrichtung und das Laufwerk unabhängig von der gewählten Justierung an den Kontaktstellen stets flächig aneinander anliegen, ist die Unterseite des Montageteils konvex ausgestaltet. Beispielsweise ist eine Rundung mit einem Radius im Bereich von 0,5 m bis 2,5 m vorgesehen. Das Montageteil rollt daher auf dem Ankerelement ab, wenn das Trennelement auf der anderen Seite höhenjustiert wird, und bleibt aufgrund der einwirkenden Kräfte flächig mit diesem verbunden. Alternativ kann das Ankerelement konkav ausgestaltet sein, so dass die dann vorzugsweise gerade Unterseite des Montageteils daran abrollen kann.

Jeder der beiden Laufwerksteilkörper kann wenigstens eine Gewindebohrung zur Aufnahme einer gegen die Platte drehbaren Montageschraube oder eines gegen die Platte drehbaren Gewindestiftes aufweisen, anhand dessen der Laufwerksteilkörper mit der Platte oder mit der mit der Platte verbundenen Befestigungsvorrichtung fest verbunden werden kann.

Der Laufwerksteilkörper kann wenigstens eine, vorzugsweise jedoch zwei oder drei Bohrungen, die der Aufnahme einer Lagerwelle für ein Laufrad dienen, oder ein Flügelelement aufweisen, das mit wenigstens einem Gleitelement oder wenigstens einem magnetisch wirksamen Element versehen ist.

Das Laufwerk kann daher an beliebige Lasten angepasst werden, indem eine entsprechende Anzahl von Laufelementen, beispielsweise 2, 4, 6 oder mehr Laufräder vorgesehen werden.

Der Laufwerksteilkörper kann wenigstens eine Bohrung aufweisen, die der Aufnahme einer Montagewelle für ein vorzugsweise elastisches Arretierelement dient, welches mit Elementen einer Puffervorrichtung zusammenwirken kann.

Der Laufwerksteilkörper kann wenigstens eine Ausnehmung für den Eingriff eines vorzugsweise elastischen Kopplungselements aufweisen, mittels dessen die beiden Laufwerksteilkörper lose oder fest miteinander verbindbar sind.

Die der Aufnahme des Laufwerks dienende Schiene kann direkt mit der Decke verbunden oder innerhalb eines in die Decke eingesenkten Montageprofils gehalten sein.

An der Unterseite wenigstens eines der Seitenteile der Schiene kann vorteilhaft ein Hilfsprofil vorgesehen werden, das der Aufnahme der Oberseite einer stationären Zusatzplatte dient und/oder das ein Flügelelement aufweist, das gegen die Platte gerichtet ist und die montierte Vorrichtung optisch abdeckt.

Mittels der erfindungsgemässen Vorrichtung und einer damit gehaltenen Platte, vorzugsweise einer Glasplatte, wird daher auf vorteilhafte Weise ein Trennelement gebildet, das ein vorteilhaftes Laufverhalten und ausgezeichnete ästhetische Eigenschaften aufweist.

Die Vorrichtung kann ferner mitsamt der Schiene mittels eines Montageprofils in die Decke versenkt werden, so dass mittels der erfindungsgemässen Trennelemente ein technisch und optisch noch vorteilhafterer Raumabschluss realisierbar ist.

Nachfolgend wird die Erfindung anhand von Zeichnungen näher erläutert. Dabei zeigt:
- Figur 1: eine erfindungsgemässe Vorrichtung 1 mit einem in einer Schiene 3 geführten erfindungsgemässen Laufwerk 1, das beidseitig in einer Befestigungsvorrichtung 2 verankert ist, welches mit einer Glasplatte 4 verbunden ist, die in einer Bodenführung 5 verschiebbar gehalten ist;
- Figur 2: die Schiene 3 von Figur 1, die zwei durch ein Mittelteil 32 miteinander verbundene Seitenteile 31a, 31b aufweist, die gegeneinander gerichtete Fusselemente 311 aufweisen, an deren Oberseiten Laufflächen 3111 für Laufelemente 12 des Laufwerks 1 vorgesehen sind;
- Figur 3: die Schiene 3 von Figur 2, an deren Seitenteilen 31a, 31b je ein Hilfsprofil 35 vorgesehen ist, das als Abschlussblende oder dem Halten einer stationären Platte 400, vorzugsweise einer Glasplatte dient;
- Figur 4 a-c: verschiedene Ansichten der Glasplatte 4 von Figur 1 mit einer erfindungsgemässen Befestigungsvorrichtung 2;
- Figur 5: die aus zwei zueinander symmetrischen Montageteilen 21a, 21b, zwei identischen Schutzelementen 24 und einem mit einer Gewindebohrung 221 versehenen Bolzen 22 bestehende Befestigungsvorrichtung von Figur 1;
- Figur 6 a-c: eine Platte 4 mit einer runden Ausnehmung 41, die durch ein V-förmiges Teilsegment 410 nach oben geöffnet ist, und in die ein Lagerelement 25 mit einer längsförmigen Durchtrittsöffnung 251 einsetzbar ist, die der mittels Dämpfungselementen 26 gedämpften Lagerung des Bolzens 22 dient;
- Figur 7: eine Befestigungsvorrichtung 2, deren Montageteile 21a, 21b zusammen mit einem Mittelstück ein U-Profil bilden;
- Figur 8 a-d: ein erfindungsgemässes mit vier Laufrädern 12 versehenes Laufwerk 1, das aus zwei zu einander symmetrischen Laufwerksteilen besteht, die mittels zwei elastischen Elementen 15 lösbar miteinander verbunden sind;
- Figur 9 a-d: ein erfindungsgemässes mit sechs Laufrädern 12 versehenes Laufwerk 1, das zusammen mit zwei zueinander symmetrischen Puffervorrichtungen 6 in eine Schiene 3 eingeführt wird;
- Figur 10 a-c: das im Eingriff mit einer Befestigungsvorrichtung 2 und zwei Puffervorrichtungen 6 stehende Laufwerk 1 von Figur 9a mit Detaildarstellungen des elastischen Elements 15 in vorzugsweisen Ausgestaltungen;
- Figur 11 a-b: eine von zwei einstückig, gegensinnig oder gleichsinnig an der Platte 4 angeformten oder eingearbeiteten Befestigungsvorrichtungen 42;
- Figur 12: die Befestigungsvorrichtung 2 von Figur 1, deren Montageteile 21a, 21b an einem verjüngten Oberteil 43 der Platte 4 montiert sind, das nach der Montage des Laufwerks 1 bündig mit einem Abdeckelement 45 abgedeckt werden kann, welches mit der Platte 4 eine ebene Fläche bildet;
- Figur 13: ein erfindungsgemässes Laufwerk 1, dass wie die zuvor gezeigten Laufwerke 1 mit einer Befestigungsvorrichtung 2 verbindbar ist, deren Laufelemente jedoch Gleitelemente 120 und Magnetlager sind, die durch Magneten 1200 im Laufwerkskörper 1a, 1b und dazu korrespondierende Magnetelemente 1201 in der Schiene 3 gebildet werden;
- Figur 14 a-c: eine ein- oder zweiteilige Befestigungsvorrichtung 2, die in einer an der Oberseite der Platte 4 vorgesehenen Nut 44 montiert ist, und ein erfindungsgemässes ein-oder zweiteiliges Laufwerk 1 mit einem einzelnen Laufwerksteil 1c, das in die Nut 44 einsenkbar und an dessen Unterseite mit Ankerelementen 114a, 114b versehen ist;
- Figur 15: die erfindungsgemässe Vorrichtung von Figur 1 mit einer Schiene 3 die in einem in die Decke 8 eingesenkten Montageprofil 300 gehalten ist, und mit einer kombinierten Bodenführung 550 für die verschiebbar gelagerte und die stationär gehaltene Glasplatte 4 bzw. 400;
- Figur 16: die erfindungsgemässe Vorrichtung von Figur 1 mit einer kombinierten Bodenführung 550;
- Figur 17 a-b: eine einfache Bodenführung 5 mit einem demontierbaren Seitenelement 53;
- Figur 18 a-c: eine kombinierte Bodenführung 550 mit demontierbaren Seitenelementen 53, 530;
- Figur 19 a-c: ein Laufwerk 1 mit zwei Laufwerksteilkörpern 110, die einerseits durch eine mit Laufelementen 12 versehene Kopplungsplatte und andererseits durch einen justierbaren und fixierbaren Bolzen 220, der ein innerhalb der Öffnung 41 der Platte 4 gehaltenes exzentrisches Teil 2203 aufweist; und
- Figur 20 a-c: Teile des Laufwerks 1 von Figur 19 mit vorzugsweise ausgestalteten Mitteln zur Justierung und Fixierung des Bolzens 220.

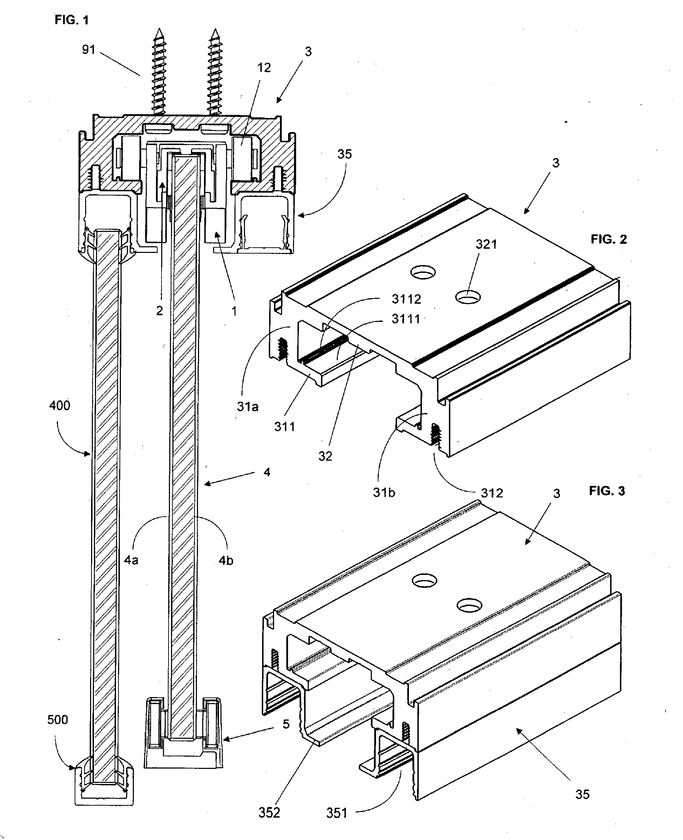

Figur 1 zeigt eine erfindungsgemässe Vorrichtung 1 mit einem erfindungsgemässen Laufwerk 1, das in konventioneller Weise mittels Laufelementen in Form von Laufrädern 12 in einer Schiene 3 geführt ist, die zwei durch ein Mittelteil 32 miteinander verbundene Seitenteile 31a, 31b aufweist, die gegeneinander gerichtete Fusselemente 311 aufweisen, an deren Oberseiten Laufflächen 3111 für die Laufelemente 12 des Laufwerks 1 vorgesehen sind (siehe Figur 3).

Das Laufwerk 1 ist auf beiden Seiten einer Befestigungsvorrichtung 2 verankert, die an der Oberseite einer Platte 4, vorzugsweise einer Glasplatte, montiert ist, die eine Frontseite 4a und eine Rückseite 4b aufweist. Die Befestigungsvorrichtung 2, die eine geringe Bauhöhe aufweist, wird vom Laufwerk 1, das ebenfalls nur eine geringe Bauhöhe aufweist, vollständig überdeckt und ist von der Seite nicht sichtbar. Die Platte 4 mit der Befestigungsvorrichtung 2, die auf die Platte 4 aufgesetzt oder an diese angeformt oder eingearbeitet sein kann, ist fast bis zur Oberseite des Laufwerks 1 hochgezogen, weshalb von aussen keine Spalten sichtbar sind und ein fast dichter bzw. leicht abdichtbarer Abschluss resultiert.

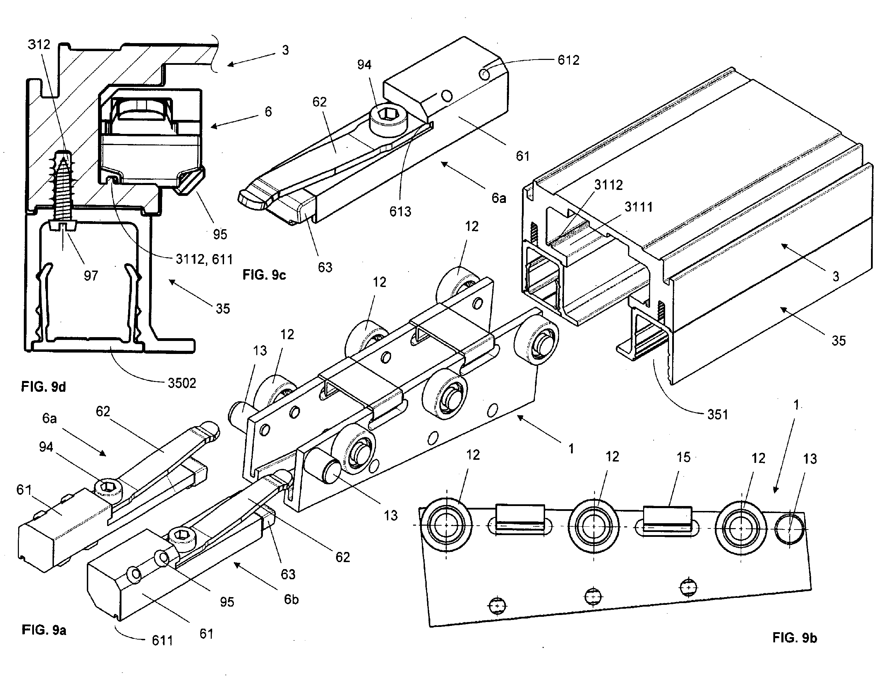

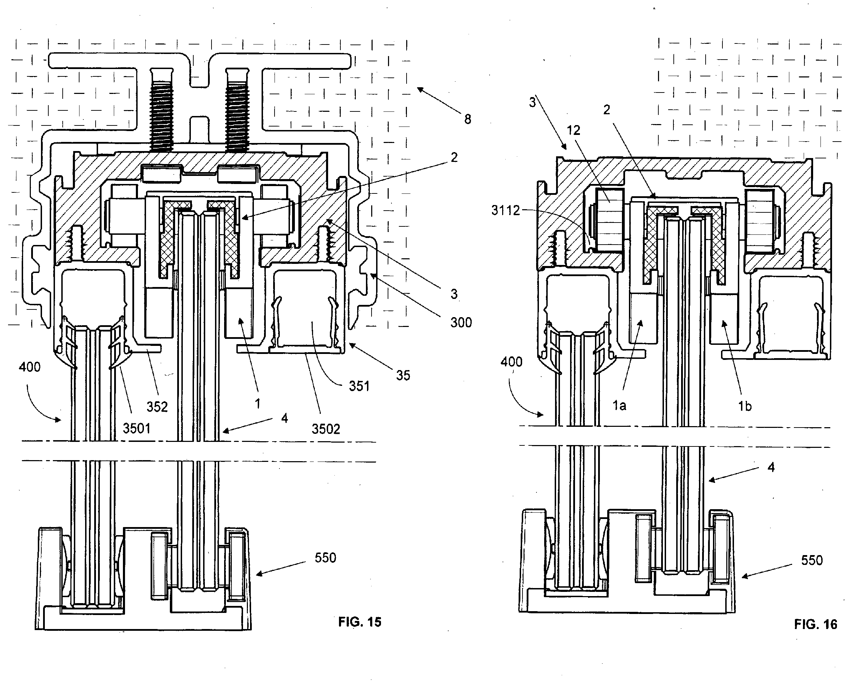

An den Seitenteilen 31a, 31b der Schiene 3 sind U-Profil-förmige Hilfsprofile 35 mittels Schrauben 97 befestigt, die in einen Schraubenkanal 312 im zugehörigen Seitenteil 31 eingedreht sind (siehe Figur 9d und Figur 15).

Beide Hilfsprofile 35 weisen einen Kanal 351 zur Aufnahme einer stationären Platte 400 und einen Abdeckflügel 352 auf, der gegen die verschiebbare Platte 4 gerichtet wird und als Blende dient.

Im linken Hilfsprofil 35 von Figur 1 und Figur 15 ist eine am Boden mit einer Bodenführung 500 gehaltene stationäre Platte 400, vorzugsweise eine Glasplatte, mittels einer Dichtung 3501 gehalten. In das rechte Hilfsprofil 35 von Figur 1 und Figur 15 ist ein Deckel 3502 eingesetzt, welcher das Hilfsprofil 35 abschliesst.

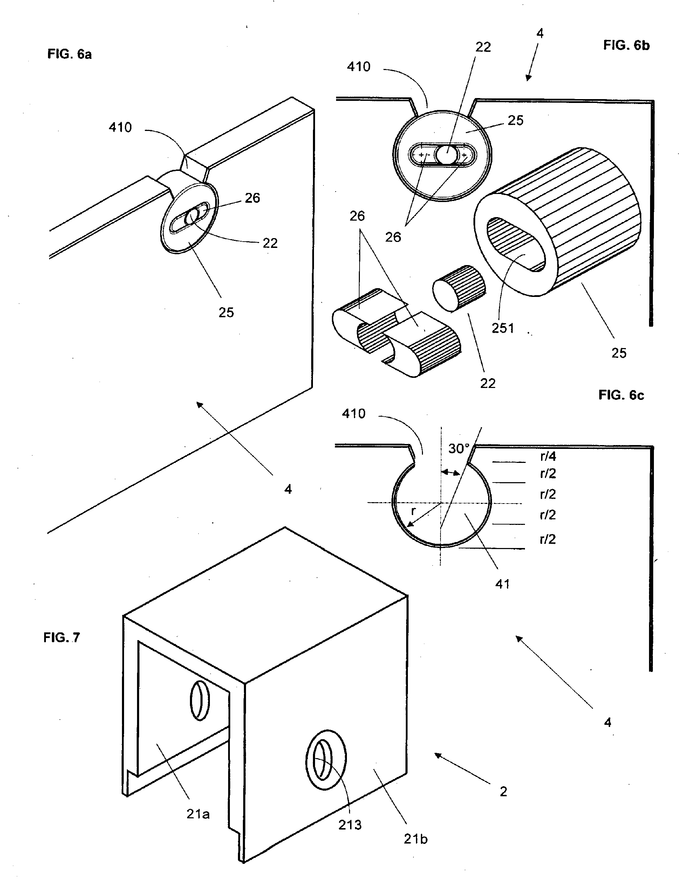

Figur 2 zeigt die oben beschriebene Schiene 3 von Figur 1, in deren Mittelteil 32 zwei Bohrungen 321 vorgesehen sind, die der Durchführung der Montageschrauben 91 dienen. Neben den Laufflächen 3111 weist die Schiene 3 eine Federleiste 3112 auf, die dem Halten einer Puffervorrichtung 6 dient, wie das in Figur 6 gezeigt ist.

Figur 3 zeigt die Schiene 3 von Figur 2, an deren Seitenteilen 31a, 31b je ein Hilfsprofil 35 vorgesehen ist.

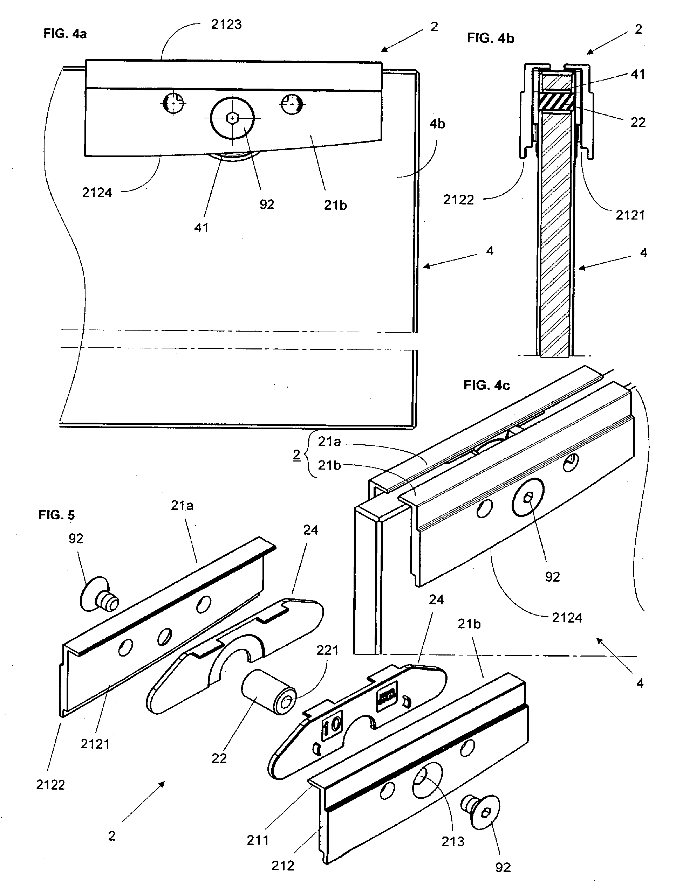

Figur 4a, Figur 4b und Figur 4c zeigen die Glasplatte 4 von Figur 1, an der die in Figur 5 gezeigte Befestigungsvorrichtung 2 montiert ist, die zwei Montageteile 21a, 21b, zwei identische elastische Schutzelemente 24 und einen mit einer Gewindebohrung 221 versehenen Bolzen 22 aufweist, an dem die Montageteile 21a, 21b mittels Schrauben 92 montierbar sind. Die beiden in Bezug zur Platte 4 symmetrisch ausgestalteten Montageteile 21a, 21b, die ein L-Profil mit einem kürzeren Kopfteil 211 und einem längeren Seitenteil 212 aufweisen, können in vorzugsweisen Ausgestaltungen einstückig zu einem U-Profil zusammengefasst werden, wie dies in Figur 7 gezeigt ist. Da die Befestigungsvorrichtungen 2 zumeist für Platten 4 mit unterschiedlichen Dicken verwendbar sein sollen, werden vorzugsweise zwei voneinander getrennte Montageteile 21a, 21b vorgesehen.

Figur 4a zeigt die Rückseite 4b der Platte 4 mit dem Montageteil 21b, welches mittels einer Montageschraube 92 mit dem Bolzen 22 verbunden ist, der in einer in der Platte 4 vorgesehenen Öffnung 41 angeordnet ist. In Figur 4a ist ferner gezeigt, dass die Befestigungsvorrichtung 2 eine parallel zur Oberkante der Platte 4 verlaufende Oberseite 2123 und eine leicht schräg dazu verlaufende und konvex ausgebildete Unterseite 2124 aufweist.

Figur 4b zeigt einen Schnitt durch die vollständig von Glas umschlossene Öffnung 41 der Platte 4 und durch die zweiteilige Befestigungsvorrichtung 2. Es ist ersichtlich, dass die Seitenteile 212 an der Unterseite je ein Flanschelement 2122 aufweisen, welches eine der Platte 4 zugewandte Schulter 2121 nach aussen begrenzt. Das Flanschelement 2122 und die Schulter 2121 verlaufen parallel zueinander und sind vorzugsweise konvex ausgebildet.

Figur 6a, Figur 6b und Figur 6c zeigen eine Platte 4 mit einer runden Ausnehmung 41, die durch ein V-förmiges Teilsegment 410 nach oben geöffnet ist. In den Figuren 6a und 6b ist in die Ausnehmung 41 ein Lagerelement 25 mit einer längsförmigen Durchtrittsöffnung 251 eingesetzt, in der zwei Federelemente oder Dämpfungselemente 26 vorgesehen sind, die den ebenfalls in die Durchtrittsöffnung 251 eingesetzten Bolzen 22 elastisch halten. Durch die elastische Lagerung des Bolzens 22 werden harte mechanische Schläge, welche die Vorrichtung belasten könnten, sowie entsprechende Geräusche vermieden.

Figur 6c zeigt die Ausnehmung 41 in der Platte 4, die V-förmig nach aussen geöffnet ist. Die V-förmige Öffnung 410 erlaubt es, die runde Ausnehmung näher an den oberen Rand der Platte 4 zu verschieben, ohne dass bei höherer Belastung des Bolzens 22 bzw. des Lagerelements 25 mit einem Glasbruch zu rechnen ist.

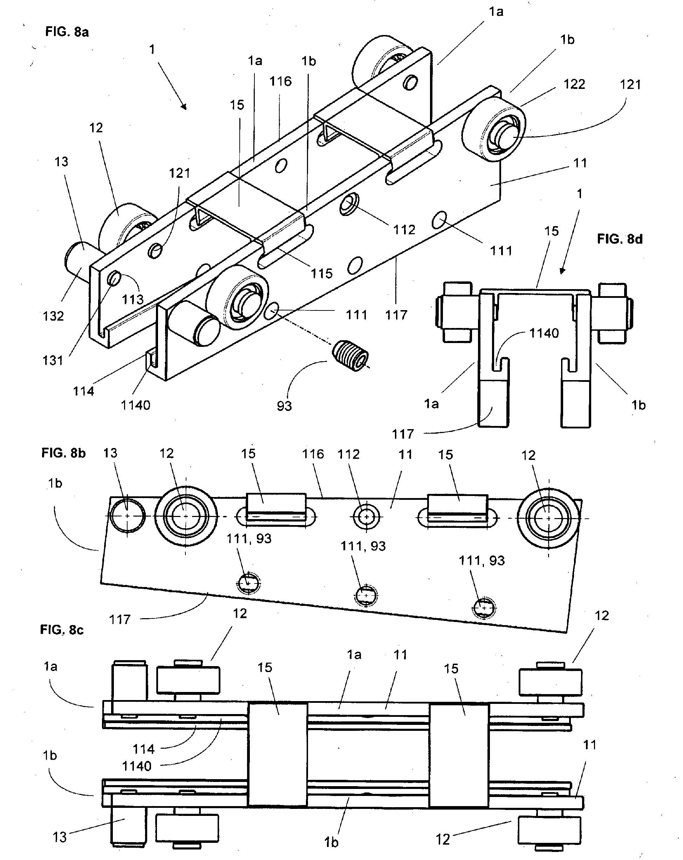

Die Figuren 8a bis 8d zeigen verschiedene Darstellungen eines erfindungsgemässen Laufwerks 1, das aus zwei Laufwerksteilen 1a, 1b besteht, die in Bezug auf eine Ebene, die beispielsweise durch die Frontseite der Platte 4 gebildet wird, symmetrisch zueinander ausgestaltet sind. Die Laufwerksteile 1a, 1b sind ausserordentlich einfach ausgestaltet und bestehen grundsätzlich aus einer keilförmigen, vorzugsweise metallischen oder aus Kunststoff bestehenden Platte bzw. einem Laufwerksteilkörper 11, der an der Oberseite 116 zwei Ausnehmungen 115 zur Aufnahme je eines vorzugsweise elastischen Kopplungselements 15, drei Bohrungen 112 zur Aufnahme von Wellen 121 für Laufräder 12 bzw. dessen Rollen 122, sowie eine Bohrung 113 aufweist, die der Aufnahme einer Montagewelle 131 für ein Arretierelement 13 bzw. für einen Arretierzylinder 132 dient. An der Unterseite 117 weist der Laufwerksteilkörper 11 drei der Aufnahme von Gewindebolzen 93 dienende Bohrungen 111 sowie ein gerades, schienenförmiges Ankerelement 114 auf, das in der Art eines der Platte 4 zugewandten kleineren U-Profils eine Aufnahmenut 1140 bildet.

Der Laufwerksteilkörper 11 kann somit in einfacher Weise durch Extrusion oder Biegen und anschliessende einfache Bearbeitung durch Bohren oder Stanzen gefertigt werden. Die an der Oberseite 116 der Laufwerksteilkörper 11 vorgesehenen Kopplungselemente 15 können hilfsweise vorgesehen werden, um die Montage des Laufwerks 1 zu erleichtern, indem die beiden Laufwerksteile 1a, 1b stets nebeneinander gehalten werden. Zur Anpassung an die Last 4 können die Laufwerksteile 1a, 1b je mit einem, zwei oder drei Laufrädern 12 versehen werden. Die vorzugsweise vorgesehenen Arretierelemente 13 werden frontseitig am Laufwerk 1 vorgesehen und wirken im Bereich des Anschlags mit Pufferfedern 62 und Pufferelementen 63 von Puffervorrichtungen 6 zusammen, wie dies in Figur 9 gezeigt ist.

Die Figuren 9a und 9b zeigen ein erfindungsgemässes mit sechs Laufrädern 12 versehenes Laufwerk 1, das zusammen mit zwei Puffervorrichtungen 6a, 6b derart in eine Schiene 3 eingeführt wird, dass die Laufräder 12 auf den zugehörigen Laufflächen 3111 der Schiene 3 abrollen. Die zueinander hinsichtlich einer durch die Platte 4 definierten Ebene symmetrischen Puffervorrichtungen 6a, 6b werden je auf eine der Laufflächen 3111 abgelegt und dort mittels einer parallel zur zugehörigen Lauffläche 3111 angeordneten Federleiste 3112 gehalten, die in eine Nut 611 im Körper 61 der Puffervorrichtung 6a bzw. 6b eindringt (siehe Figur 9d). Mittels Montageschrauben, gegebenenfalls mit einer Ringschneide versehenen Gewindebolzen 95, die durch Bohrungen 612 im Pufferkörper 61 hindurch geführt sind, kann die Puffervorrichtung 6a, 6b in der Schiene 3 arretiert werden.

Die Figur 9c zeigt die Puffervorrichtung 6a von Figur 9a, dessen Pufferkörper 61 frontseitig ein elastisches Pufferelement 63 trägt und in den eine Montageschraube 94 eingedreht ist, mittels der eine in eine Montagenut 613 im Pufferkörper 61 eingesetzte Pufferfeder 62 in Position gehalten, gegebenenfalls mit einer Vorspannung beaufschlagt wird.

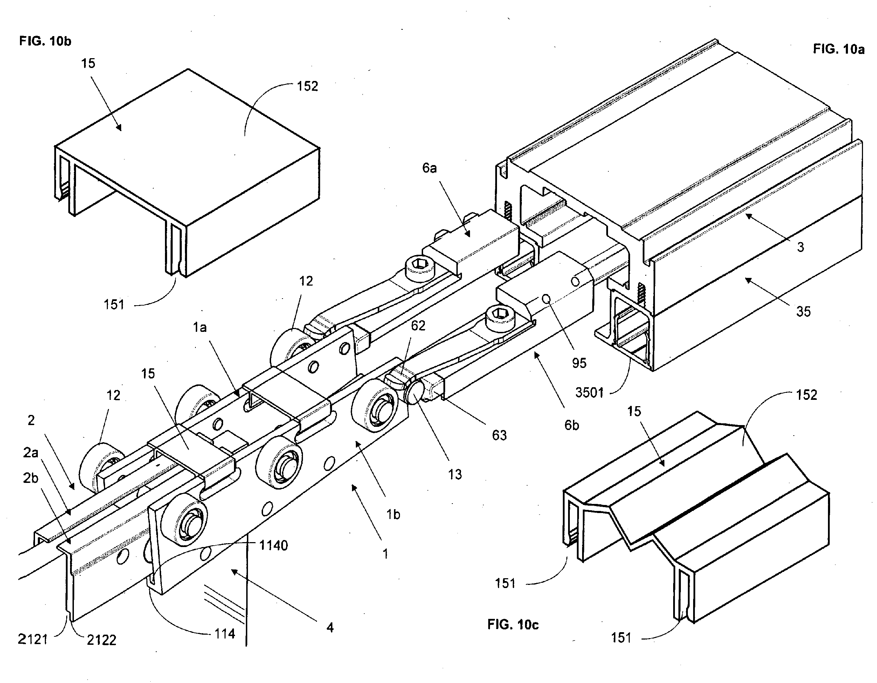

Figur 10a zeigt das im Eingriff mit einer Befestigungsvorrichtung 2 und zwei Puffervorrichtungen 6 stehende Laufwerk 1 von Figur 9a. Der konvexe Flansch 2122 des zugehörigen Montageteils 2b ist in die Aufnahmenut 1140 des Ankerelements 114 eingeführt und die konvexe Schulter 2121 auf das Ankerelement 114 des Laufwerksteils 1b abgestützt, so dass die Befestigungsvorrichtung 2 und das Laufwerk 1 nun soweit gegeneinander verschoben werden können, bis die Platte 4 in einer gewünschten Höhe gehalten ist und durch Anziehen der Montageschrauben 93, die gegen den Flansch 2122 gedreht werden, fixiert werden kann. Möglich sind alternative Justiermöglichkeiten beispielsweise mittels einer Rasterung, die eine schrittweise Justierung erlaubt und die Vorrichtungsteile ansonsten in Position hält. Ferner ist das Zusammenwirken des Arretierelements 13 mit dem Pufferelement 63 und der Pufferfeder 62 der Puffervorrichtung 6b gezeigt, mittels dessen das Trennelement gestoppt und gehalten werden kann. Figur 10 zeigt eine Seite des Trennelements mit der Vorrichtung. An der anderen Seite des Trennelements ist die Vorrichtung in gleicher Weise montiert.

Figur 10b zeigt ein elastisches Kopplungselement 15, welches zwei durch ein Verbindungselement 152 miteinander verbundene Klammerelemente 151 aufweist, die in die Öffnungen 115 in den Laufwerksteilen 1a, 1b eingreifen können. Figur 10c zeigt ein elastisches Kopplungselement 15, welches ein balgartiges und somit zusammenfaltbares Verbindungselement 152 aufweist. Zwei mit diesem elastischen Kopplungselement 15 gehaltene Laufwerksteile 1a und 1b können daher soweit gegeneinander gedrückt werden, bis sie mit den Laufrädern 12 zwischen den Fusselementen 311 der U-Profil-förmigen Schiene 3 hindurch in diese eingeführt werden können. Diese Ausgestaltung des Laufwerks bzw. des elastischen Kopplungselements erlaubt somit die Montage und die Demontage des Laufwerks in bzw. aus einer bereits fest installierten Schiene 3.

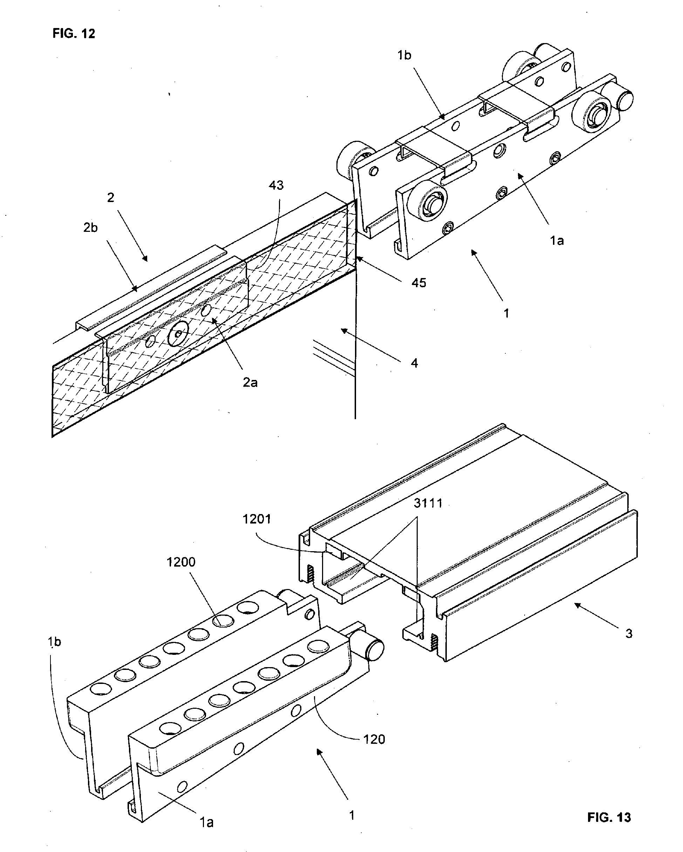

Figur 12 zeigt eine Platte 4 mit einem Oberteil 43, das vorzugsweise derart verjüngt bzw. geschmälert ist, dass die Montageteile 21a, 21b der Befestigungsvorrichtung 2 gemäss Figur 1 und die damit verbundenen Laufwerksteile 1a, 1b die durch die Aussenseiten 4a, 4b der Platte 4 definierten Ebenen nicht überragen. Das verjüngte Oberteil 43 der Platte 4 kann nach der Montage des Laufwerks 1 daher bündig mit einem Abdeckelement 45 abgedeckt werden kann, welches mit der Platte 4 sodann eine ebene Fläche bildet.

Figur 13 zeigt ein erfindungsgemässes Laufwerk 1, das wie die zuvor gezeigten Laufwerke 1 mit einer Befestigungsvorrichtung 2 verbindbar ist, dessen Laufelemente jedoch Gleitelemente 120 und Magnetlager sind, die durch Magneten 1200 im Laufwerksteilkörper 1a, 1b und dazu korrespondierende Magnetelemente 1201 in der Schiene 3 gebildet werden. Entsprechende magnetische Lagervorrichtungen sowie Gleitvorrichtungen sind in [3], WO 2006/032157 A1 beschrieben, welche durch Bezugnahme in das vorliegende Dokument integriert wird.

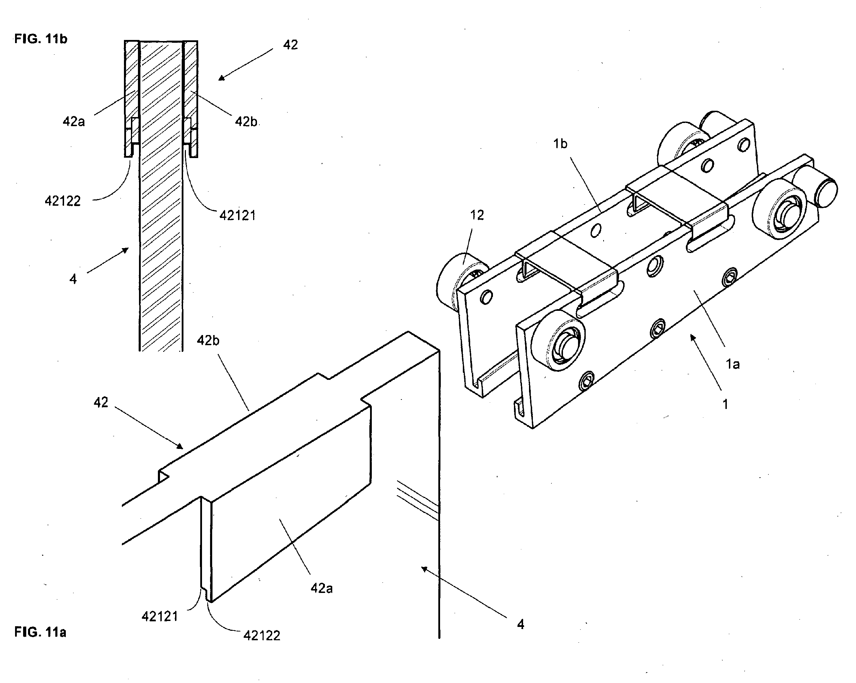

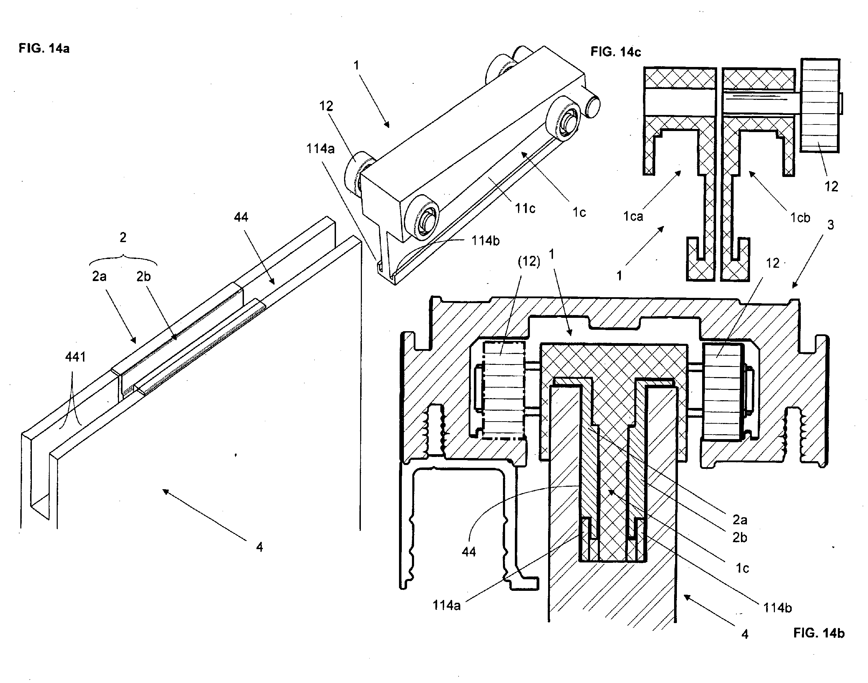

Die Figuren 14a, 14b und 14c zeigen eine besonders vorteilhafte Ausgestaltung der Erfindung, bei der die Befestigungsvorrichtung 2 in einer an der Oberseite der Platte 4 vorgesehenen Nut 44 montiert ist. Das erfindungsgemässe, mit Lagerelementen 12 versehene Laufwerk 1 weist in den Ausgestaltungen von Figur 14a und Figur 14b ein einzelnes, in die Nut 44 einsenkbares Laufwerksteil 1c auf, das beidseitig an dessen Unterseite mit Ankerelementen 114a, 114b versehen ist, die je einer Wand 441 der Nut 44 zugewandt sind und mit den dort vorgesehenen Montageteilen 2a, 2b; 42a, 42b (siehe Figur 11) der Befestigungsvorrichtung 2, 42 zusammenwirken können, wie dies anhand der Figuren 10 und 11 bereits erläutert wurde. Die beiden Montageteile 2a, 2b können dabei einstückig oder zweiteilig ausgebildet sein. Wie in Figur 14c gezeigt, kann auch das Laufwerk 1 in dieser Ausgestaltung aus zwei vorzugsweise zueinander komplementären und/oder symmetrischen Teilen 1ca, 1cb bestehen, von denen wenigstens eines mit einem Laufelement 12, beispielsweise einem mittels einer Welle gelagerten Laufrad versehen ist. Für dieses zweiteilige Laufwerk 1 resultieren dieselben Vorteile wie für das in Figur 2 gezeigte zweiteilige Laufwerk 1. Insbesondere sind bei dieser Ausgestaltung auch höhere Fertigungstoleranzen erlaubt.

Figur 15 zeigt die erfindungsgemässe Vorrichtung von Figur 1 mit einer Schiene 3 die in einem in die Decke 8 eingesenkten Montageprofil 300 gehalten ist. Die Schiene 3, das Laufwerk 1 und die Oberseite der Platte 4 sind daher innerhalb der Decke 8 gehalten, geschützt und mit einfachen Massnahmen praktisch vollständig abdeckbar, so dass zwischen der Platte 4 und der gegebenenfalls mit einem Verputz versehenen Decke 8 nur ein schmaler, optisch kaum wahrnehmbarer Schlitz verbleibt.

Figur 16 zeigt die erfindungsgemässe Vorrichtung von Figur 1 mit einer kombinierten Bodenführung für die verschiebbar gelagerte und die stationär gehaltene Glasplatte 4 bzw. 400.

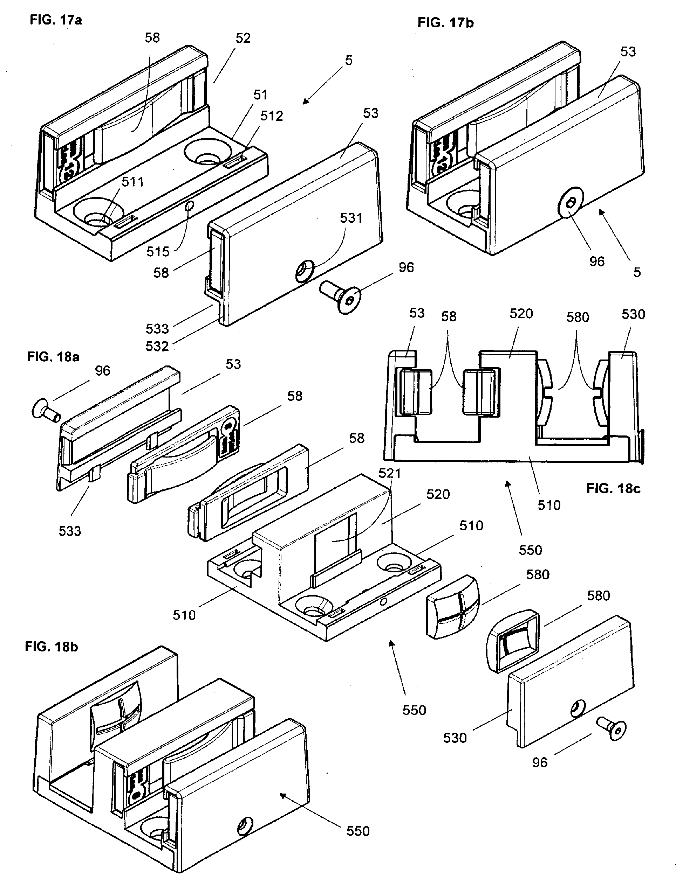

Die Figuren 17a und 17b zeigen eine einfache U-Profil-förmige Bodenführung 5 mit einer Basisplatte 51, an der ein nicht lösbares und ein lösbares Seitenelement 52 bzw. 53 vorgesehen sind, in die je ein elastisches Element 58, beispielsweise eine in einem Rahmen gehaltene Feder, einsetzbar sind. Die Basisplatte 51 weist Bohrungen 511 für Montageschrauben und an einer Seite Ausnehmungen 512 für Kopplungselemente 533 (siehe Figur 18a), die an der Unterseite des lösbaren Seitenelements 53 vorgesehen sind. Das lösbare Seitenelement 53 kann daher mit den Kopplungselementen 533 in die Ausnehmungen 512 eingesetzt und mittels einer Montageschraube 96 fixiert werden, die durch eine Öffnung 531 im lösbaren Seitenelement 53 bzw. an einem an dessen Unterseite vorgesehenen Abschlussflansch 532 geführt werden kann.

Die Figuren 18a, 18b und 18c zeigen eine kombinierte Bodenführung 550 mit einer Basisplatte 510, die in der Mitte ein vorzugsweise nicht lösbares Zentralelement 520 aufweist und an den Seiten mit lösbaren und für den Betrieb fixierbaren Seitenelementen 53, 530 bestückt werden kann, die je ein elastisches Element 58 bzw. 580 aufweisen. Die beiden lösbaren Seitenelemente 53, 530 bilden mit der Basisplatte 510 und dem Zentralelement 520 zwei U-Profile von denen das erste zum Führen der verschiebbaren Platte 4 und das zweite zum Halten der stationären Platte 400 dient, wie dies in Figur 15 gezeigt ist. Das Zentralelement 520 und das zugehörige lösbare Seitenelement 530 weisen Öffnungen 521 auf, in die entsprechend ausgestaltete elastische Elemente 580 einsetzbar sind.

Die erfindungsgemässen Bodenführungen 5, 550 erlauben nach dem Entfernen der beiden lösbaren Seitenelemente 53, 530 das einfache Installieren und Deinstallieren bzw. seitlich Zuführen und Entfernen der verschiebbaren oder stationären Platte 4, 400. Die Bodenführung 5, 550 kann daher vorinstalliert werden und muss für die Installation und Deinstallation der Platte 4, 400 nicht mehr demontiert werden.

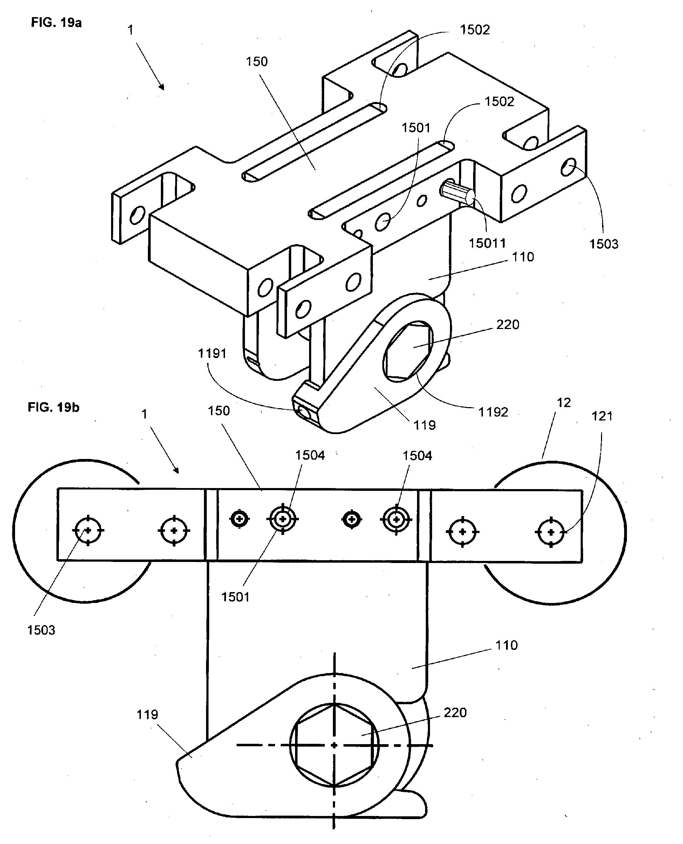

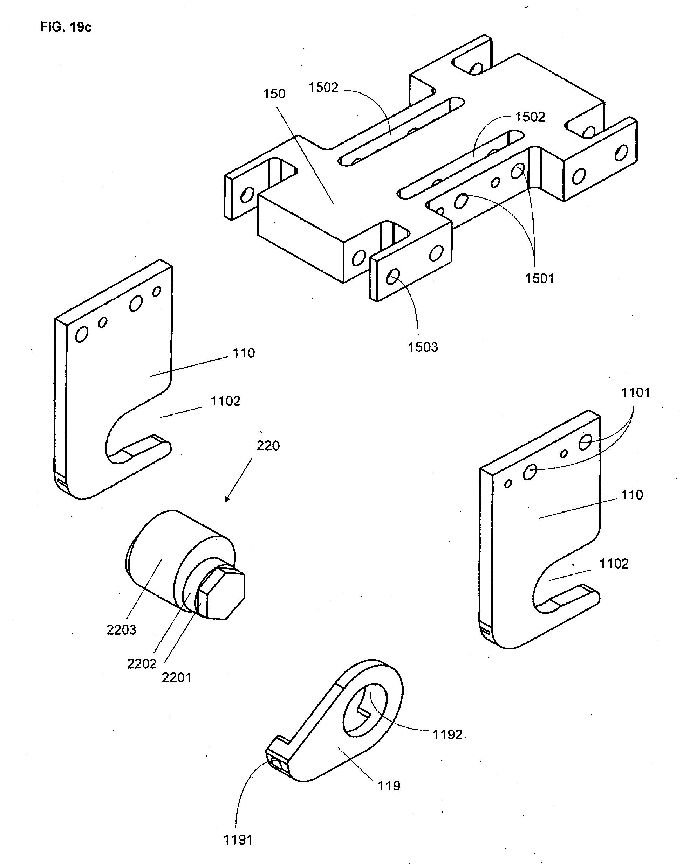

Die Figuren 19a, 19b und 19c zeigen ein weiteres vorteilhaft ausgestaltetes Laufwerk 1 mit zwei Laufwerksteilkörpern 110, die einerseits durch eine mit Laufelementen 12 versehene Kopplungsplatte 150 und andererseits durch einen justierbaren und fixierbaren Bolzen 220 miteinander verbunden bzw. verbindbar sind, der durch eine Öffnung 41; 41, 410 in einer Platte 4 durchführbar ist.

Die Laufwerksteilkörper 110 sind oben in Öffnungen 1502 der Kopplungsplatte 150 mittels Haltebolzen 15011 gehalten, die in Bohrungen 1501 in der Kopplungsplatte 150 eingeführt und durch Bohrungen 1101 im Laufwerksteilkörper 110 hindurchgeführt sind. Die Kopplungsplatte 150 weist ferner Bohrungen 1503 auf, die je der Aufnahme der Welle 121 eines Laufrades 12 dienen.

Der Bolzen 220 weist ein innerhalb der Öffnung 41 der Platte 4 (beispielsweise gemäss Figur 4 oder Figur 6) gehaltenes exzentrisches Teil 2203 und beidseitig daran anschliessend Lagerelemente 2202 auf, die innerhalb von Ausnehmungen 1102 in den Laufwerksteilkörpern 110 drehbar gehalten sind. An einer Seite weist der Bolzen 220 eine Kupplungstrommel 2201 auf, die in einer Ausnehmung 1192 eines Justierhebels 119 festgehalten ist, der um die die Achse des Bolzens 220 drehbar und mittels einer Schraube 98 fixierbar ist, die durch eine Gewindebohrung 1191 im Justierhebel 119 hindurch gegen den zugehörigen Laufwerksteilkörper 110 gedreht werden kann.

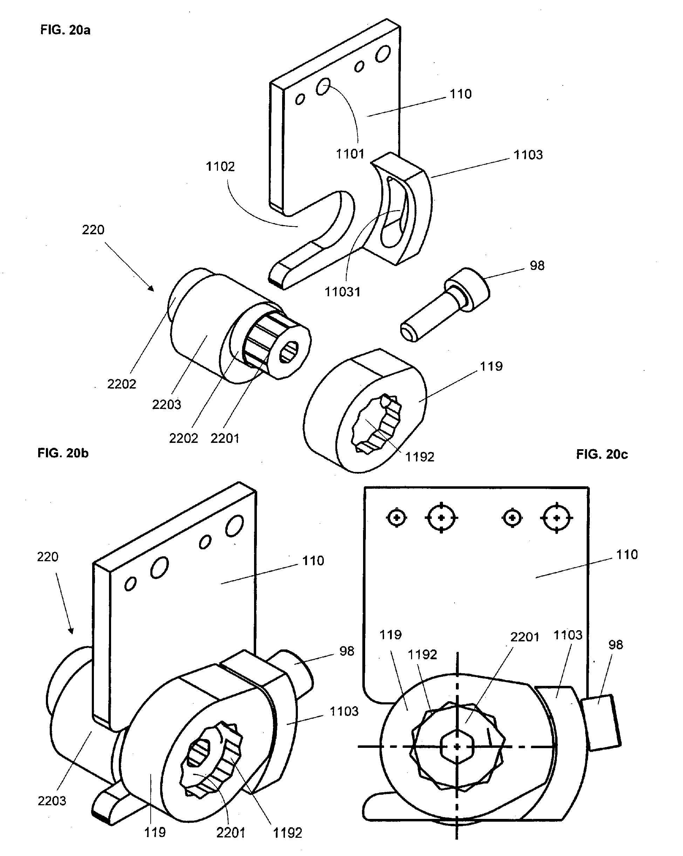

Die Figuren 20a, 20b und 20c zeigen den Bolzen 220 von Figur 19 sowie einen vorzugsweise ausgestalteten Laufwerksteilkörper 110, der mit einem Fixierflansch 1103 mit einer darin vorgesehenen Längsöffnung aufweist, durch die die Fixierschraube 98 mit einem etwas einfacher ausgestalteten Justierhebel 119 verbindbar ist. Zur Höheneinstellung der gehaltenen Platte 4 kann der Justierhebel 119 wiederum mit dem Bolzen 220 in eine passende Lage gedreht und anschliessend durch Festziehen der Schraube 98 fixiert werden.

Das in den Figuren 19 und 20 gezeigte Laufwerk 1, das einfach aufgebaut und kostengünstig herstellbar ist, erlaubt ebenfalls, die Platte 4 zu halten, ohne diese wesentlich abzudecken.

Die erfindungsgemässe Vorrichtung, das Laufwerk und das Trennelement wurden in bevorzugten Ausgestaltungen beschrieben und dargestellt. Anhand der erfindungsgemässen Lehre sind jedoch vielfältige weitere fachmännische Ausgestaltungen der beschriebenen Befestigungsvorrichtung realisierbar. Insbesondere sind verschiedene weitere fachmännische Ausgestaltungen des Laufwerkskörpers realisierbar, der in vorzugsweisen Ausgestaltungen ein- oder auch zweiteilig ausgestaltet werden kann. Die Ausgestaltung des Laufwerks wird dabei vorzugsweise unter Berücksichtigung der Beschaffenheit der Platte und der Einheitlichkeit der Abmessungen derselben sowie unter Berücksichtigung der vorliegenden Produktionswerkzeuge und der Kosten derselben, gegebenenfalls auch unter Berücksichtigung der jeweils resultierenden und erforderlichen Laufeigenschaften des Laufwerks gewählt. Die Materialen und Werkstoffe für das Laufwerk und die Befestigungsvorrichtung, wie Metalle und Kunststoffe werden vorzugsweise unter Berücksichtigung derselben Gesichtspunkte gewählt. Für die Platte sind alle üblichen Materialien wählbar. Die Art, Anordnung und Anzahl des wenigstens einen Laufelements kann ebenfalls entsprechend den vorliegenden Bedürfnissen gewählt werden.

### Literaturverzeichnis

[1] WO 98/59140 A1
[2] EP 0 586 840 A1
[3] WO 2006/032157 A1

### Bezugszeichenliste:

- 1: Laufwerk
- 1a, 1b: zueinander komplementäre Teile des Laufwerks 1
- 1c: einzelnes für den Eingriff in die Nut 44 vorgesehenes Laufwerksteil mit Ankerelementen 114a,b
- 1ca, 1cb: zueinander komplementäre, für den Eingriff in die Nut 44 vorgesehene Teile des Laufwerks 1
- 11: Laufwerksteilkörper
- 11c: Laufwerksteilkörper
- 110: Laufwerksteilkörpers für stabile Kopplungsplatte
- 1101: Bohrung zur Aufnahme des Haltebolzens 15011
- 1102: Ausnehmung zum Halten des Bolzens 220
- 1103: Fixierflansch
- 11031: Längsöffnung für die Fixierschraube 98
- 111: Bohrung zur Aufnahme eines Gewindebolzens 93
- 112: Bohrung zur Aufnahme der Welle 121 eines Laufrades
- 113: Bohrung zur Aufnahme der Montagewelle 131
- 114 a, b: Ankerelement
- 1140: Aufnahmenut
- 115: Ausnehmung zur Aufnahme des vorzugsweise elastischen Kopplungselements 15
- 116: Oberseite des Laufwerksteilkörpers 111
- 117: Unterseite des Laufwerksteilkörpers 111
- 119: Justierhebel
- 1191: Gewindebohrung zur Aufnahme der Schraube 98
- 1192: Ausnehmung im Justierhebel 119
- 12: Laufelemente, wie Laufräder, Gleitelemente, Magnetlager
- 120: Gleitelement mit Magneten 1200
- 1200: Magneten in Pillenform
- 1201: magnetisches Schienenelement
- 121: Welle des Laufrades 12
- 122: Rolle des Laufrades 12
- 13: Arretierelement
- 131: Montagewelle
- 132: Arretierzylinder
- 15: vorzugsweise elastisches Kopplungselement 15
- 150: Kopplungsplatte mit Laufrädern 12
- 151: Klammerelemente
- 152: Verbindungselement, gegebenenfalls faltbar
- 1501: Bohrung zur Aufnahme der Kopplungswelle 1503
- 15011: Haltebolzen
- 1502: Ausnehmung zur Aufnahme des Laufwerksteilkörpers
- 1503: Bohrung zur Aufnahme der Welle 121 des Laufrades
- 2: Befestigungsvorrichtung
- 21a, 21b: Montageteile der Befestigungsvorrichtung 2
- 211: Kopfteil des Montageteils 21a bzw. 21b
- 212: Seitenteil des Montageteils 21a bzw. 21b
- 2121: vorzugsweise konvexe Schulter
- 2122: vorzugsweise konvexer Flansch
- 2123: Oberseite des Montageteils 21a bzw. 21b
- 2124: Unterseite des Montageteils 21a bzw. 21b
- 213: Öffnung zur Aufnahme der Montageschraube 92
- 22: Bolzen mit Gewindebohrung 221
- 220: Bolzen mit Lagerelementen 2202
- 2201: Kupplungstrommel
- 2202: Lagerelemente
- 2203: Exzenter
- 221: Gewindebohrung
- 24: elastisches Schutzelement
- 25: Lagerelement mit einer Durchtrittsöffnung 251
- 251: runde oder schlitzartige Durchtrittsöffnung für den Bolzen 22
- 26: Dämpfungselemente für die schlitzartige Durchtrittsöffnung 251
- 3: Schiene
- 300: Montageprofil
- 31a, 31b: Seitenteile der Schiene 3
- 311: Fusselement des Seitenteils 31a bzw. 31b
- 3111: Lauffläche
- 3112: Federleiste
- 312: Schraubenkanal für die Montage des Hilfsprofils 35
- 32: Mittelteil der Schiene 3
- 321: Bohrung zur Durchführung der Montageschrauben 91
- 35: Hilfsprofil
- 3501: Dichtung
- 3502: Deckel
- 351: Kanal zur Aufnahme der stationären Platte 4
- 352: Abdeckflügel
- 4: mittels wenigstens eines Laufwerks 1 gehaltene Platte, insbesondere Glasplatte
- 400: stationäre Platte, insbesondere Glasplatte
- 4a, 4b: linke und rechte Frontseite der Glasplatte 4
- 41: Ausnehmung zur Aufnahme des Bolzens 22 oder des mit dem Bolzen 22 versehenen Lagerelements 25
- 410: V-Ausschnitt die Öffnung 41 teilweise überlappend
- 42: Befestigungsvorrichtung einstückig an der Platte
- 42121: vorzugsweise konvexe Schulter
- 42122: vorzugsweise konvexer Flansch
- 43: schmaleres Oberteil
- 44: Nut in der Oberseite der Platte 4
- 441: einander gegenüberliegende Seiten der Nut 44
- 45: Abdeckelement
- 5: Bodenführung für die Glasplatte 4
- 500: Bodenführung für die stationäre Glasplatte 400
- 51: Basisplatte der einfachen Bodenführung 5
- 510: Basisplatte der kombinierten Bodenführung 550
- 511: Bohrungen in der Basisplatte 51
- 512: Aufnahmeöffnungen in der Basisplatte 51
- 52: nicht lösbares Seitenelement
- 520: nicht lösbares Zentralelement
- 521: Aufnahmeöffnung für das elastische Element 580
- 53, 530: lösbare Seitenelemente
- 531: Öffnung zur Aufnahme der Montageschraube 96
- 532: Abschlussflansch
- 533: Kopplungselement korrespondierend zur Aufnahmeöffnung 512
- 550: kombinierte Bodenführung für die Glasplatten 4, 400
- 58: elastisches Element für die verschiebbare Platte 4
- 580: elastisches Element für die stationäre Platte 400
- 6a, 6b: zueinander symmetrische Puffervorrichtungen
- 61: Pufferkörper
- 611: Nut im Pufferkörper zur Aufnahme der Federleiste
- 612: Bohrung im Pufferkörper 61 für eine Schraube 95
- 613: Montagenut
- 62: Pufferfeder
- 63: elastisches Pufferelement
- 8: Decke
- 91: Montageschrauben für die Schiene 3
- 92: Montageschrauben für die Montageteile 21a, 21b
- 93: Gewindebolzen gegebenenfalls mit Ringschneide
- 94: Schraube zur Montage der Pufferfeder
- 95: Gewindebolzen gegebenenfalls mit Ringschneide
- 96: Montageschraube für die Bodenführung 5, 550
- 97: Schrauben zur Montage des Hilfsprofils 35
- 98: Schraube zum Fixieren des Justierhebels 1109

## Patentansprüche

1. Vorrichtung mit einem Laufwerk (1), das dem Halten einer Platte (4), insbesondere einer Glasplatte, dient, das wenigstens zwei Laufelemente (12) aufweist, die entlang von zwei Laufflächen (3111) einer zumindest annähernd U-Profil-förmigen Schiene (3) führbar sind, die ein Mittelteil (32) und zwei Seitenteile (31a, 31b) mit je einem Fusselement (311) aufweist, an dessen Oberseite eine der Laufflächen (3111) vorgesehen ist, **dadurch gekennzeichnet, dass** das Laufwerk (1) zwei voneinander getrennte Laufwerksteile (1a, 1b) mit je einem Laufwerksteilkörper (11) aufweist, die an den der Platte (4) abgewandten Seiten je mit wenigstens einem der Laufelemente (12) versehen sind und die an der Unterseite einander zugewandte Ankerelemente (114a, 114b) je eine Aufnahmenut (1140) aufweisen, in die beidseits der Platte (4) gehaltene Montageteile (21a, 21b) einer mit der Platte (4) verbindbaren Befestigungsvorrichtung (2) eingreifen, wobei die Ankerelemente (114a, 114b) und die Unterseiten der Montageteile (21a, 21b) schräg zur Laufrichtung des Laufwerks (1) verlaufen.

2. Vorrichtung nach Anspruch 1, **dadurch gekennzeichnet, dass** die beiden plattenförmigen Laufwerksteile (1a, 1b) zumindest annähernd symmetrisch ausgestaltet sind.

3. Vorrichtung nach Anspruch 1 oder 2, **dadurch gekennzeichnet, dass** die Laufwerksteilkörper (11) je wenigstens eine Gewindebohrung (111) aufweisen, in der eine gegen die Platte (4) drehbare Montageschraube oder ein gegen die Platte (4) drehbarer Gewindestift (93) drehbar gehalten ist.

4. Vorrichtung nach Anspruch 1, 2 oder 3, **dadurch gekennzeichnet, dass** die Laufwerksteilkörper (11) je wenigstens eine Bohrung (112) aufweisen, in der eine Lagerwelle (121) gehalten ist, welche das als Laufrad ausgestaltete Laufelemente (12) hält.

5. Vorrichtung nach Anspruch 3 oder 4, **dadurch gekennzeichnet, dass** die beiden Laufwerksteile (1a, 1b) durch wenigstens ein vorzugsweise elastisches Kopplungselement (15) miteinander verbunden sind.

6. Vorrichtung nach einem der Ansprüche 1 - 5, **dadurch gekennzeichnet, dass** die Montageteile (21a, 21b) einstückig miteinander verbundene oder voneinander getrennte I- oder L-Profil-förmige Platten sind, welche anhand von Montagemitteln, wie Schrauben oder mittels eines Bolzens (22) miteinander verbunden sind, der durch eine durchgehende Ausnehmung (41; 41, 410) in der Platte (4) hindurchgeführt und mittels Montageschrauben (93) beidseits mit den Montageteilen (21a; 21b) verschraubt ist.

7. Vorrichtung nach einem der Ansprüche 1 - 6, **dadurch gekennzeichnet, dass** zwischen den Montageteilen (21a und 21b) und der Platte (4) elastische Schutzelemente (24) vorgesehen sind und/oder dass der Bolzen (22) aus elastischem Material besteht, elastisches Material trägt oder in der Öffnung (41) benachbart zu elastischem Material gelagert ist, das unter Krafteinwirkung deformierbar ist.

8. Vorrichtung nach einem der Ansprüche 1 - 7, **dadurch gekennzeichnet, dass** jedes Montageteil (21a und 21b) eine gerade verlaufende Oberseite (2123) und eine konvex und/oder schräg verlaufende Unterseite (2124) aufweist, die ein in die Aufnahmenut (1140) des zugehörigen Ankerelements (114, 114a, 114b) einführbares Flanschelement (2122) und/oder eine Schulter (2121) aufweist, die auf das Ankerelement (114) abstützbar ist.

9. Vorrichtung nach Anspruch 8, **dadurch gekennzeichnet, dass** die Neigungen der schräg verlaufenden Unterseite (2121, 2122) des Montageteils (21a; 21b) und des Ankerelements (114) des Laufwerksteilkörpers (11) zumindest annähernd gleich sind.

10. Vorrichtung nach Anspruch 8 oder 9, **dadurch gekennzeichnet, dass** die Wölbung des konvex ausgebildeten Flanschelements (2122) und/oder der konvex ausgebildeten Schulter (2121) derart gewählt sind, dass, unabhängig von gegenseitigen Drehungen des Montageteils (21a; 21b) und des Laufwerksteilkörpers (11), die im Rahmen der Nivellierung der Platte (4) auftreten können, die Unterseite (2121, 2122) des Montageteils (21a; 21b) und das Ankerelement (114) des Laufwerksteilkörpers (11) stets flächig aneinander anliegen.

11. Vorrichtung nach einem der Ansprüche 6-10, **dadurch gekennzeichnet, dass** die Schiene (3)
a) mit der Decke (8) verbunden ist; oder
b) innerhalb eines in die Decke (8) eingesenkten Montageprofils (300) gehalten ist; oder
c) an der Unterseite wenigstens eines der Seitenteile (31a, 31b) mit einem Hilfsprofil (35) versehen ist, das der Aufnahme der Oberseite einer stationären Zusatzplatte (400) dient und/oder ein Flügelelement aufweist, das gegen die Platte (4) gerichtet ist.

12. Vorrichtung nach einem der Ansprüche 6-11, **dadurch gekennzeichnet, dass** ein Puffer (6) mit einem Pufferkörper (61) vorgesehen ist, der mit einer dem Halten eines am Laufwerk (1) vorgesehenen Arretierelements (13) dienenden Pufferfeder (62) verbunden ist und der innerhalb des Profils der Schiene (3) auf einer der Laufflächen (3111) sitzt und von einer parallel zur Lauffläche (3111) verlaufenden und in eine Nut (611) am Pufferkörper (61) eingreifenden Federleiste (3112) sowie wenigstens einer Arretierschraube (95) arretiert ist, welche an das Innenprofil der Schiene (3) andrückt und den Pufferkörper (61) dadurch gegen die Federleiste (3112) andrückt.

13. Vorrichtung nach einem der Ansprüche 6-12, **dadurch gekennzeichnet, dass** auf der Lauffläche (3111) des linken und des rechten Seitenteils (31a und 31b) Puffer (6a, 6b) mit Pufferkörpern (61) sitzen, die symmetrisch zu einer Ebene ausgebildet sind, die senkrecht zur Längsachse der Pufferkörper (61) bzw. zur Oberseite der Platte (4) steht.

14. Vorrichtung nach einem der Ansprüche 6-13, **dadurch gekennzeichnet, dass** die Ausnehmung (41) in der Platte (4) die Form eines senkrecht zur Platte (4) ausgerichteten und die Platte (4) durchlaufenden Zylinders aufweist, der vollständig umschlossen oder zumindest annähernd V-förmig gegen die Oberseite der Platte (4) geöffnet ist.

15. Vorrichtung nach Anspruch 14, **dadurch gekennzeichnet, dass** der Bolzen (22) in einem vorzugsweise elastischen Lagerelement (25) in einer runden oder in horizontaler Richtung beidseitig begrenzt durch Dämpfungselemente (26) in einer schlitzartigen Durchtrittsöffnung (251) gehalten ist.

16. Trennelement mit einer Platte (4), vorzugsweise einer Glasplatte, die mittels einer Vorrichtung nach einem der Ansprüche 1-15 in einer Schiene 3 gehalten und geführt ist.

## Claims

1. Device with a carriage (1), that serves for holding a panel (4), in particular a glass panel, and that comprises at least two running elements (12), which are guidable along two running surfaces (3111) of an at least approximately U-profile-shaped rail (3) which comprises a central part (32) and two lateral parts (31a, 31b), each provided with a foot element (311) that comprises one of the running surfaces (3111) on its upper side, **characterised in that** the carriage (1) comprises two carriage parts (1a, 1b) separated from one another, each with a carriage part body (11) that, on the side facing away from the panel (4), are provided each with one of the running elements (12) and that comprise at the lower side anchoring elements (114a, 114b), which are facing one another and which comprise each a receiving groove (1140), into which, held on both sides of the panel (4), mounting parts (21a, 21b) of a fixing device (2) are engaged, which is connectable to the panel (4), wherein the anchoring elements (114a, 114b) and the lower sides of the mounting parts (21a, 21b) extend inclined to the running direction of the carriage (1).

2. Device according to claim 1, **characterised in that** the two plate shaped carriage parts (1a, 1b) are formed at least approximately symmetrical.

3. Device according to claim 1 or 2, **characterised in that** the carriage part bodies (11) comprise each at least one threaded bore (111), in which a mounting screw that can be turned towards the panel (4) is held or a threaded pin (93) that can be turned towards the panel (4) is held.

4. Device according to claim 1, 2 or 3, **characterised in that** the carriage part bodies (11) comprise each at least one bore (112), in which a bearing shaft (121) is held, which holds the running element (12) that is provided in the embodiment of a running wheel.

5. Device according to claim 3 or 4, **characterised in that** the two carriage parts (1a, 1b) are connected to one another by means of a preferably elastic coupling element (15) .

6. Device according to one of the claims 1-5, **characterised in that** the mounting parts (21a and 21b) are I-profile- or L-profile-shaped plates, which are formed in one part or are separated from one another and which are connected with one another by means of assembly means, such as screws, or by means of a bolt (22) which is guided through a continuous recess (41; 41, 410) in the panel (4) and screwed by means of assembly screws (93) on both sides to the mounting parts (21a; 21b).

7. Device according to one of the claims 1-6, **characterised in that** protective elastic elements (24) are provided between the mounting parts (21a and 21b) and the panel (4) and/or **in that** the bolt (22) consists of elastic material, carries elastic material or is mounted in the opening (41) adjacent to elastic material which can be deformed under the effect of force.

8. Device according to one of the claims 1-7, **characterised in that** each assembly part (21a and 21b) comprises a straight upper side (2123) and a lower side (2124) which is convex and/or inclined, which lower side (2124) comprises a flange element (2122) which can be introduced into the receiving groove (1140) of the associated anchoring element (114, 114a, 114b) and/or a shoulder (2121) which can be supported on the anchoring element (114).

9. Device according to claim 8, **characterised in that** the inclinations of the inclined lower side (2121, 2122) of the assembly part (21a; 21b) and of the anchoring element (114) of the carriage part body (11) are at least approximately the same.

10. Device according to claim 8 or 9, **characterised in that** the camber of the convexly formed flange element (2122) and/or the convexly formed shoulder (2121) are selected in such a way that, independently of reciprocal rotations of the assembly part (21a; 21b) and of the carriage part body (11), which may arise within the scope of the levelling of the panel (4), the lower side (2121, 2122) of the assembly part (21a; 21b) and the anchoring element (114) of the carriage part body (11) constantly lie flat against each other.

11. Device according to one of the claims 6-10, **characterised in that** the rail (3)
a) is connected to the ceiling (8); or
b) is held within an assembly profile (300) sunk into the ceiling (8); or
c) is provided on the lower side of at least one of the lateral parts (31a, 31b) with an auxiliary profile (35) which serves to receive the upper side of a stationary additional panel (400) and/or comprises a wing element which is orientated against the panel (4).

12. Device according to one of the claims 6-11, **characterised in that** a buffer (6) is provided with a buffer body (61) which is connected to a buffer spring (62) serving to hold a locking element (13) provided on the carriage (1) and which lies within the profile of the rail (3) on one of the running surfaces (3111) and is locked by a resilient strip (3112) extending parallel to the running surface (3111) and engaging in a groove (611) on the buffer body (61) and at least one locking screw (95), which presses against the inner profile of the rail (3) and thereby presses the buffer body (61) against the resilient strip (3112).

13. Device according to one of the claims 6-12, **characterised in that** buffers (6a, 6b) with buffer bodies (61) lie on the running surface (3111) of the left and the right lateral part (31a and 31b), which are formed symmetrically to a plane which is perpendicular to the longitudinal axis of the buffer body (61) or to the upper side of the panel (4) respectively.

14. Device according to one of the claims 6-13, **characterised in that** the recess (41) in the panel (4) has the form of a cylinder orientated perpendicular to the panel (4) and going through the panel (4), which cylinder is completely surrounded or open in an at least approximately V-shaped way towards the upper side of the panel (4).

15. Device according to claim 14, **characterised in that** the bolt is held in a preferably elastic bearing element (25) in a round or in a horizontal direction delimited on both sides by damping elements in a slot-like passage opening (251).

16. Separation element with a panel (4), preferably a glass panel, which is held and guided in a rail 3 by means of a device according to one of the claims 1 - 15.

## Revendications

1. Dispositif avec un chariot (1), pour tenir une plaque (4), en particulier une plaque en verre, qui présente au moins deux éléments de déplacement (12) pouvant être déplacés le long de deux surfaces de déplacement (3111) d'un rail (3) ayant au moins à peu près la forme d'un U, et qui présente une partie centrale (32) et deux parties latérales (31a, 31b) chacune avec un pied (311), sur la surface duquel une des surfaces de déplacement (3111) est prévue, **caractérisé en ce que** le chariot (1) présente deux parties du chariot (1a, 1b) qui sont séparées l'une de l'autre et qui présentent chacune un corps partiel du chariot (11), lesdites parties du chariot (1a, 1b) présentes sur les côtés opposé à la plaque (4) au moins un des éléments de déplacement (12) chacun et des éléments d'ancrage (114a, 114b) se trouvant sur la face inférieure et étant orienté l'un vers l'autre présentent chacun une rainure de réception (1140), dans laquelle interviennent des pièces de montage (21a, 21b), qui sont tenues des deux côtés de la plaque (4) et font partie d'un dispositif de fixation (2) joignable à la plaque (4), lesdits éléments d'ancrage (114a, 114b) et les faces inférieures des pièces de montage (21a, 21b) étant incliné par rapport direction de déplacement du chariots (1).

2. Dispositif selon la revendication 1, **caractérisé en ce que** les deux parties du chariot (1a, 1b) en formes de plaque sont au moins à peu près symétriques.

3. Dispositif selon la revendication 1 ou 2, **caractérisé en ce que** les corps partiels du chariot (11) présentent chacun au moins un alésage taraudé (111), dans lequel sont tenus de manière rotative une vis de montage qui peut être tournée par rapport à la plaque (4) ou une tige filetée (93) qui peut être tournée par rapport à la plaque (4).

4. Dispositif selon la revendication 1, 2 ou 3, **caractérisé en ce que** les corps partiel du chariot (11) présentent chacun au moins un alésage (112), dans lequel un arbre de roulement (121) est tenu, ledit arbre de roulement (121) tenant l'élément de déplacement (12) conçu en forme de roue de roulement.

5. Dispositif selon la revendication 3 ou 4, **caractérisé en ce que** les deux parties du chariot (1a, 1b) sont reliées l'une avec l'autre par au moins un élément de couplage (15) de préférence élastique.

6. Dispositif selon une des revendications 1-5, **caractérisé en ce que** les pièces de montage (21a, 21b) sont des plaques à profil de I ou L étant formées en une seule pièce ou séparées l'une de l'autre, qui sont reliées par des éléments de montage comme des vis ou au moyen d'un boulon (22), qui traverse la plaque (4) dans une ouverture (41; 41, 410) et qui est vissé des deux côtés aux pièces de montage (21a; 21b) par des vis de montage (92).

7. Dispositif selon une des revendications 1-6, **caractérisé en ce que** des éléments de protection élastiques (24) sont prévus entre les pièces de montage (21a et 21b) et la plaque (4) et/ou que le boulon (22) est formé d'un matériau élastique, porte un matériau élastique ou est logé dans l'ouverture (41) en voisinage de matériau élastique, qui peut être déformé sous l'action d'une force.

8. Dispositif selon une des revendications 1-7, **caractérisé en ce que** chaque pièce de montage (21a et 21b) présente une face supérieure (2123) droite et une face inférieure (2124) convexe et/ou oblique, ladite face inférieure (2124) présentant un élément de bride (2122) pouvant être introduit dans la rainure de réception (1140) de l'élément d'ancrage (114, 114a, 114b) correspondant et/ou présentant un épaulement (2121) pouvant s'appuyer sur l'élément d'ancrage (114).

9. Dispositif selon la revendication 8, **caractérisé en ce que** les inclinaisons des faces inférieures (2121, 2122) obliques des pièces de montage (21a; 21b) et de l'élément d'ancrage (114) du corps partiel du chariot (11) sont au moins à peu près égales.

10. Dispositif selon la revendication 8 ou 9, **caractérisé en ce que** la courbure de l'élément de bride (2122) conçu de manière convexe et/ou de l'épaulement (2121) conçu de manière convexe est choisie de manière à ce que, indépendamment de rotations mutuelles de la pièce de montage (21a; 21b) et du corps partiel du chariots (11), qui peuvent se produire lors du nivellement de la plaque (4), la face inférieure (2121, 2122) de la pièce de montage (21a; 21b) et l'élément d'ancrage (114) du corps partiel du chariot (11) s'appliquent toujours à plat.

11. Dispositif selon une des revendications 6-10, **caractérisé en ce que** le rail (3)
a) est connecté au plafond (8); ou
b) est tenu dans un profil de montage (300) encastré dans le plafond (8); ou
c) présente sur la face inférieure d'au moins une des parties latérales (31a, 31b) un profil de support (35), destiné à loger la face supérieure d'une plaque supplémentaire (400) stationnaire et/ou présente un élément d'aile orienté vers la plaque (4).

12. Dispositif selon une des revendications 6-11, **caractérisé en ce qu'**un butoir (6) avec un corps du butoir (61) est prévu, qui est relié à un ressort du butoir (62) qui est destiné à tenir un élément de verrouillage (13) sur le chariot (1), ledit butoir (6) se trouvant à l'intérieur du profil du rail (3) sur une des surfaces de déplacement (3111) et étant bloqué par une latte élastique (3112), qui est parallèle à la surface de déplacement (3111) et qui intervient dans une rainure (611) sur le corps du butoir (61), et par au moins une vis de blocage (95), qui appuie sur le profil interne du rail (3) ce qui appuie le corps du butoir (61) contre la latte élastique (3112).

13. Dispositif selon une des revendications 6-12, **caractérisé en ce que** sur la surface de déplacement (3111) des parties latérales (31a et 31b) droite et gauche se trouvent des tampons (6a, 6b) avec des corps de tampon (61), symétriques par rapport à un plan qui est orthogonale à l'axe longitudinal du corps de tampon (61) ou respectivement à la face supérieure de la plaque (4).

14. Dispositif selon une des revendications 6-13, **caractérisé en ce que** l'ouverture (41) dans la plaque (4) a la forme d'un cylindre orthogonale à la plaque (4) et traversant la plaque (4), ledit cylindre étant complètement entouré ou étant au moins partiellement ouvert en forme de V vers la face supérieure de la plaque (4).

15. Dispositif selon la revendication 14, **caractérisé en ce que** le boulon (22) est tenu dans un élément de logement (25) de préférence élastique, dans une fente de passage (251) ronde ou délimité en direction horizontale par des élément d'amortissement (26) des deux côtés.

16. Elément de séparation avec une plaque (4), de préférence une plaque en verre, qui est tenue et guidée dans un rail (3) au moyen d'un dispositif selon une des revendications 1-15.
